# EUROPEAN PATENT SPECIFICATION

(11) **EP 3 573 809 B1**
(45) Date of publication and mention of the grant of the patent: **03.03.2021**
(21) Application number: 18700692.9
(22) Date of filing: 24.01.2018
(51) Int. Cl.: B29C 49/68

(54) **APPARATUS FOR HEATING PREFORMS MADE OF THERMOPLASTIC MATERIAL**
VORRICHTUNG ZUM ERWÄRMEN VON VORFORMEN AUS THERMOPLASTISCHEM MATERIAL
APPAREIL DE CHAUFFAGE DE PRÉFORMES FAITES EN MATÉRIAU THERMOPLASTIQUE

(30) Priority: 24.01.2017 IT 201700007077
(43) Date of publication of application: 04.12.2019
(73) Proprietor: Sacmi Imola S.C., 40026 Imola (IT)
(72) Inventor: PARRINELLO, Fiorenzo, 40059 Medicina (IT); ROSSO, Alessandro, 31053 Pieve di Soligo (IT); CORRADI, Marco, 40026 Imola (IT); COLETTA, Jacopo, 47122 Forli' (IT); VENIERI, Andrea, 40026 Imola (IT); MAZZOTTI, Giovanni, 48123 Ravenna (IT); MOROVINGI, Massimo, 40026 Imola (IT)
(74) Representative: Modiano, Micaela Nadia
(86) International application number: PCT/EP2018/051679
(87) International publication number: WO 2018/138125

(56) References cited:
- EP-A1- 2 216 161
- EP-A1- 2 425 959
- EP-A1- 2 483 046
- US-A1- 2004 016 749

## Description

The present invention relates to an apparatus for heating preforms made of thermoplastic material.

Preforms are constituted essentially by a tubular body which has, at a first end, a closed bottom and, at the opposite end, a neck that forms an opening: these preforms are usually intended for the manufacture of containers, such as for example plastic bottles, by blow molding said preforms within a mold.

Typically, the neck of the preform is separated from the remaining body of the preform by a so-called finish.

Before sending the preforms to the mold, there is a heating step so that the preforms, during the blow molding step inside the mold of the blow molding unit, are in a state of optimum viscosity.

For this reason, upstream of the blow molding unit there are ovens, typically of the tunnel type, designed to heat the preforms so that their body has a suitable temperature.

Usually, the oven is constituted by a plurality of modules, each of which is tunnel-shaped.

By way of example, in order to heat the preforms, apparatuses are currently used which comprise a conveyor that is designed to move, by means of a combined rotary and translational motion, the preforms along a preset path that passes through a plurality of tunnel-shaped modules.

The heating tunnels are constituted essentially by at least two side walls which are mutually opposite with respect to the path of the preforms and in particular by a first heating wall, which is associated with heating means designed to heat the preforms, and by a second reflective wall.

By way of example, the heating means can comprise incandescent lamps, infrared lamps, NIR lamps, which emit radiation in a specific region of the electromagnetic field (Near-Infra-Red).

Such apparatuses in accordance with the preamble of claim 1 are disclosed in EP2483046A1, EP2216161A1, EP2425959A1 and US2004/016749A1.

A rather common drawback of known solutions resides in the low efficiency of the apparatus as a whole, which in practice forces the provision of extremely long heating tunnels or of a sequence of heating tunnels.

Moreover, in many cases it is necessary to provide means for cooling the lamps and the preform, which provide for forced ventilation devices adapted to introduce a flow of air that is transverse to the tunnel.

In this last case, the lateral surfaces of the tunnel have openings through which the air flow is to be introduced and aspirated.

As the openings provided in the heating and reflective walls increase, so does the ability to remove excess heat, but evidently the useful reflective surface is reduced, with a consequent decrease of the efficiency of the apparatus.

The aim of the present invention is to provide an apparatus for heating preforms made of thermoplastic material that is capable of improving the background art in one or more of the aspects indicated above.

Within this aim, an object of the invention is to devise an apparatus for heating preforms made of thermoplastic material that is extremely efficient from the energy standpoint.

Another object of the invention is to provide an apparatus for heating preforms made of thermoplastic material that is extremely shorter than currently commercially available ones.

Another object of the invention is to provide an apparatus for heating preforms made of thermoplastic material that is highly reliable, relatively easy to provide and at competitive costs.

This aim, as well as these and other objects which will become better apparent hereinafter, are achieved by an apparatus for heating preforms made of thermoplastic material according to claim 1, optionally provided with one or more of the characteristics of the dependent claims.

Further characteristics and advantages of the invention will become better apparent from the description of some preferred but not exclusive embodiments of the apparatus for heating preforms made of thermoplastic material according to the invention, illustrated by way of nonlimiting example in the accompanying drawings, wherein:

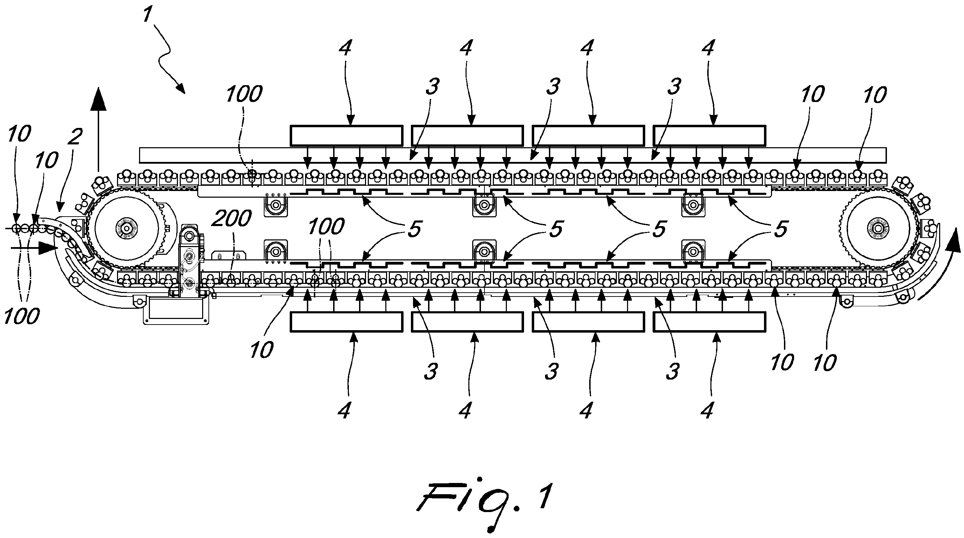

Figure 1 is a schematic top view of an apparatus 1 for heating preforms made of thermoplastic material according to the invention;
Figure 2 is a front view of the rear reflective body;
Figures 3 and 4 are perspective rear views of two different embodiments of the front reflective element;

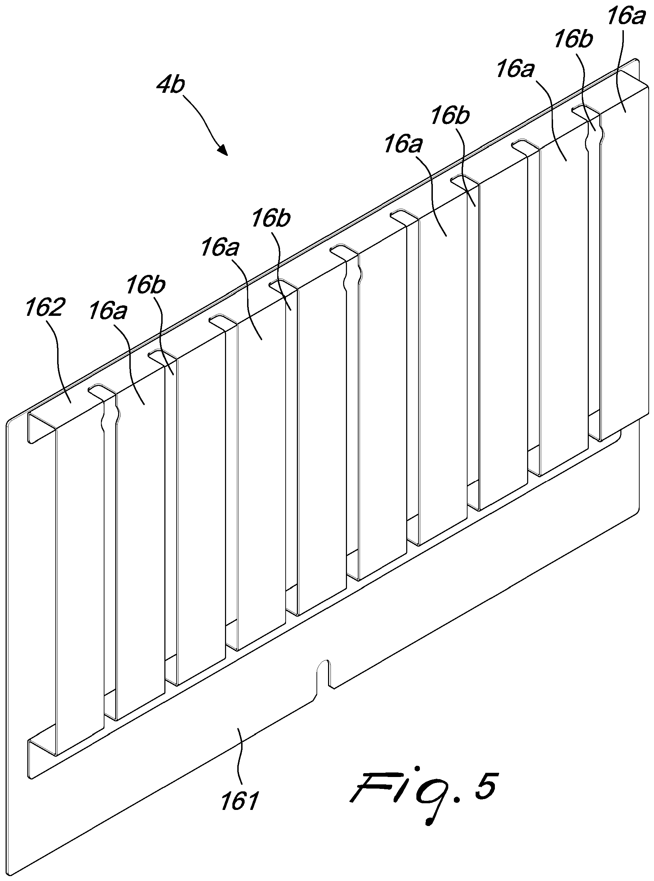

Figure 5 is another perspective view of the front surface of a different embodiment of the rear reflective body;

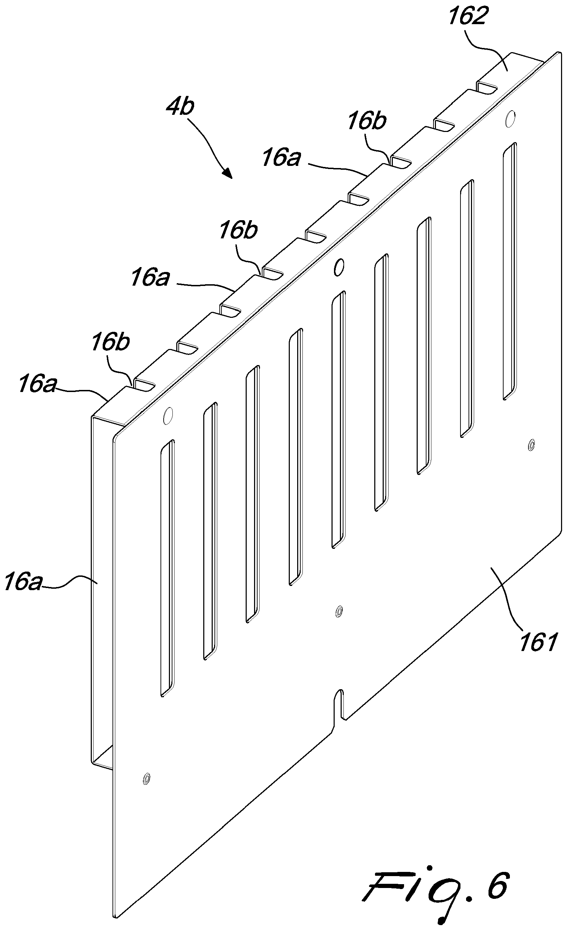

Figure 6 is another perspective view of the rear surface of the rear reflective body of Figure 5;

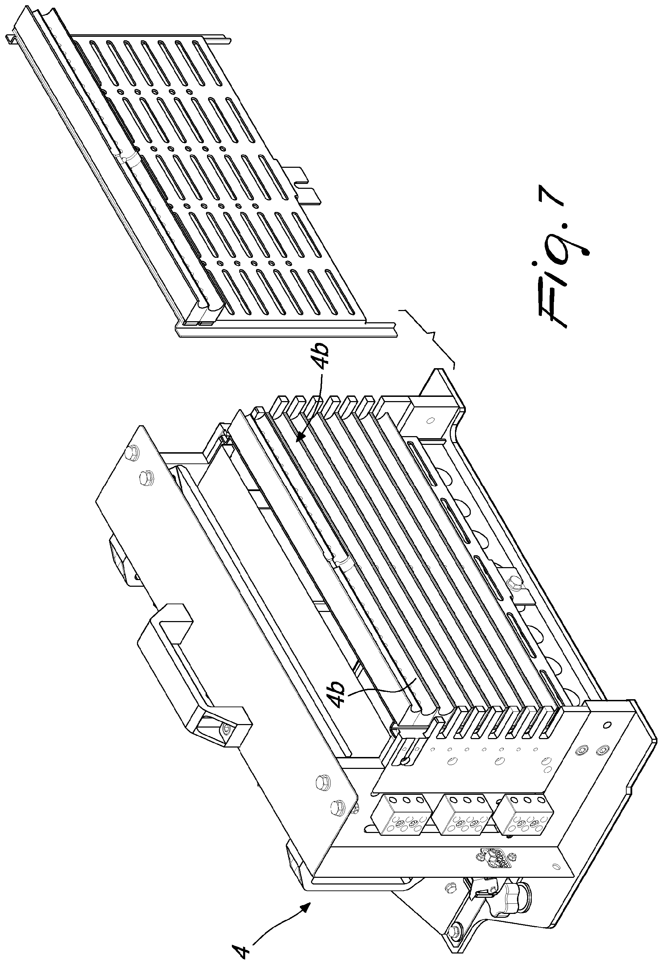

Figure 7 is a partially exploded perspective view of an embodiment of the heating element;

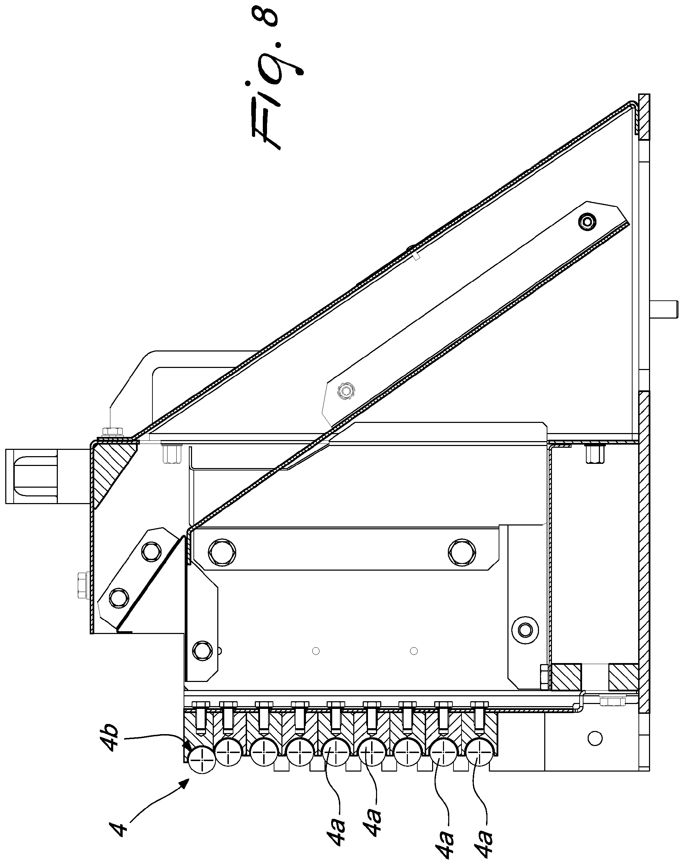

Figure 8 is a sectional view of the heating element of Figure 7, taken along a transverse plane;
Figure 9 is a perspective view of an embodiment of the heating element;
Figure 10 is an exploded perspective view of the heating element shown in Figure 9.

With reference to the cited figures, an apparatus for heating preforms made of thermoplastic material according to the invention, designated generally by the reference numeral 1, comprises a device 2 for the conveyance of preforms 10 which have a longitudinal axis of extension 100.

The conveyance device 2 is designed to move the preforms 10 along a predefined path 200.

Furthermore, the apparatus 1 has heating means 3 arranged along at least one part of the predefined path.

The heating means 3 comprise at least one heating element 4 and at least one front reflective element 5, which are mutually opposite with respect to the predefined path 200 in order to form between them a transit tunnel for the preforms 10.

The or each heating element 4 comprises a plurality of IR (Infra-Red) or NIR (Near-Infra-Red) radiation lamps 4a.

The heating element 4 conveniently comprises a rear reflective body 4b, which is arranged to the rear of the plurality of lamps 4a with respect to the extension of the predefined path 200.

According to the invention, the front reflective element 5 comprises at least one plate-like body 6 which is contoured so as to define, in the direction of extension of the predefined path 200, an alternation of closer portions 6a and spaced portions 6b with respect to the predefined path 200 which is extended substantially parallel to the axes of extension 100 of the preforms 10.

In particular, the closer portions 6a and the spaced portions 6b are extended along the entire length of the preforms 10.

Conveniently, the closer portions 6a and the spaced portions 6b are formed on substantially planar surfaces.

According to a possible constructive variation, the plate-like body 6 comprises, between contiguous spaced portions 6a and closer portions 6b, respective linking parts 6c.

Furthermore, at least one of the linking parts 6c might be provided so as to form at least one transit opening 6d for a cooling air flow.

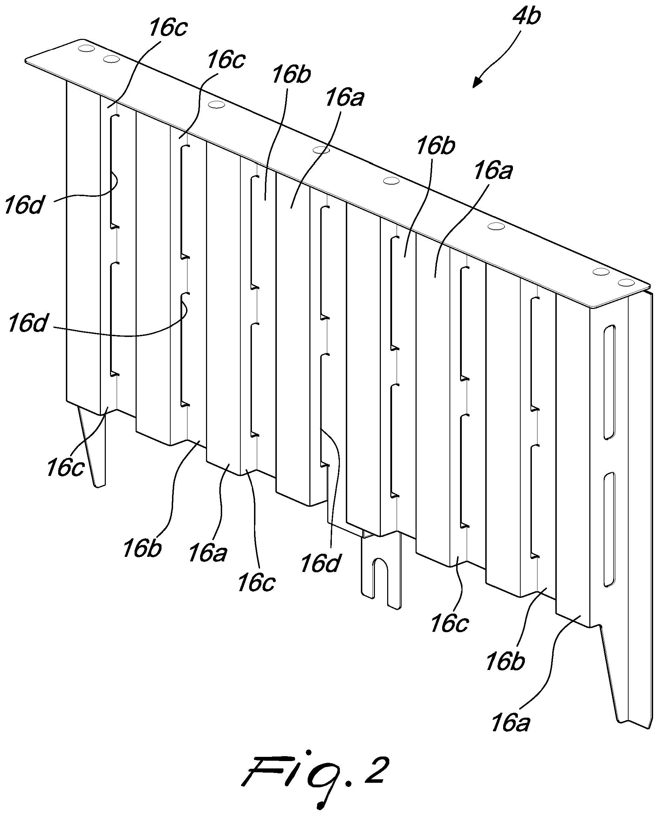

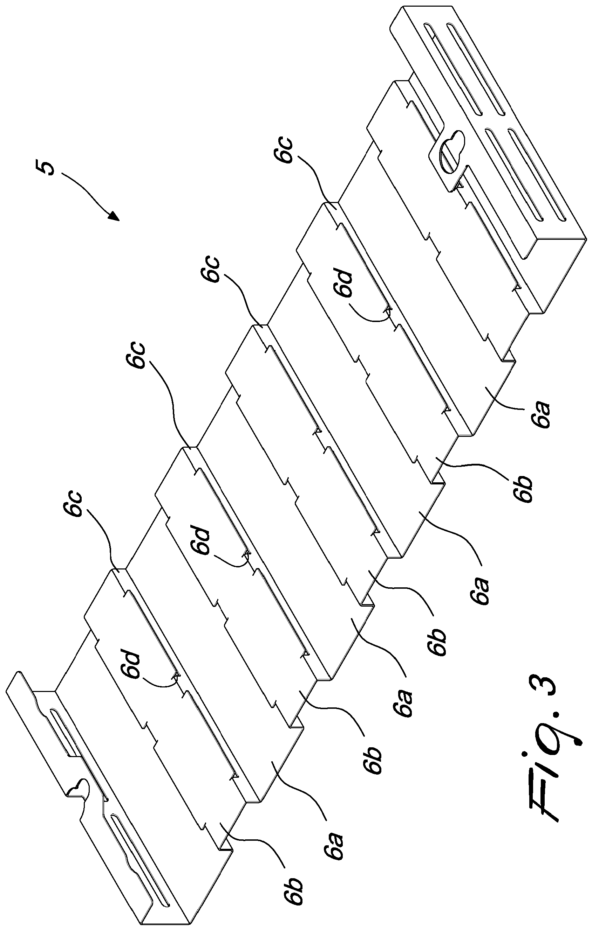

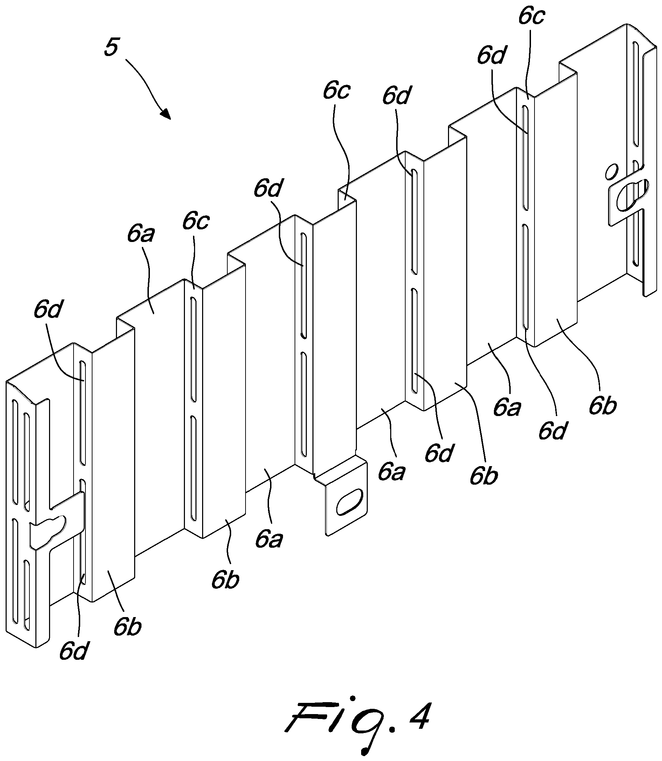

Preferably, as shown in Figures 2 to 4, at least one closer portion 6b has, at both of the parts 6c for linking to a respective spaced portion 6a, at least one transit opening 6d for a cooling air flow.

According to a possible constructive variation, the front reflective element 5 can be provided by providing a first rear plate-like body and a second front plate-like body.

The second front plate-like body forms a plurality of slits which are parallel to the axis 100 of the preforms 10 and are alternated with closer portions formed on said second front plate-like body, so that the first rear plate-like body forms, at said slits, the spaced portions.

According to a possible constructive variation, the rear reflective body 4b comprises at least one reflective contoured plate-like element in order to form an alternation of accommodation portions which have a concavity that is directed toward the predefined path 200 and are configured to arrange themselves at least partially around a respective lamp 4a.

Furthermore, the accommodation portions can be formed by an alternation of closer portions and spaced portions with respect to the predefined path 200 which are extended substantially parallel to the axes of extension of said preforms.

Furthermore, the rear reflective body 4b comprises at least one plate-like body 16 which is contoured to form, in the direction of extension of the predefined path 200, an alternation of closer portions 16a and spaced portions 16b with respect to the predefined path 200 which is extended substantially parallel to the axes of extension 100 of the preforms 10.

In particular, the closer portions 16a and the spaced portions 16b are extended along the entire length of the preforms 10.

Conveniently, the closer portions 16a and the spaced portions 16b are formed on substantially planar surfaces.

According to a possible constructive variation, the plate-like body 16 comprises, between contiguous spaced portions 16a and closer portions 16b, respective linking parts 16c.

It is furthermore possible to provide for one of the linking parts 16c to form at least one transit opening 16d for a cooling air stream.

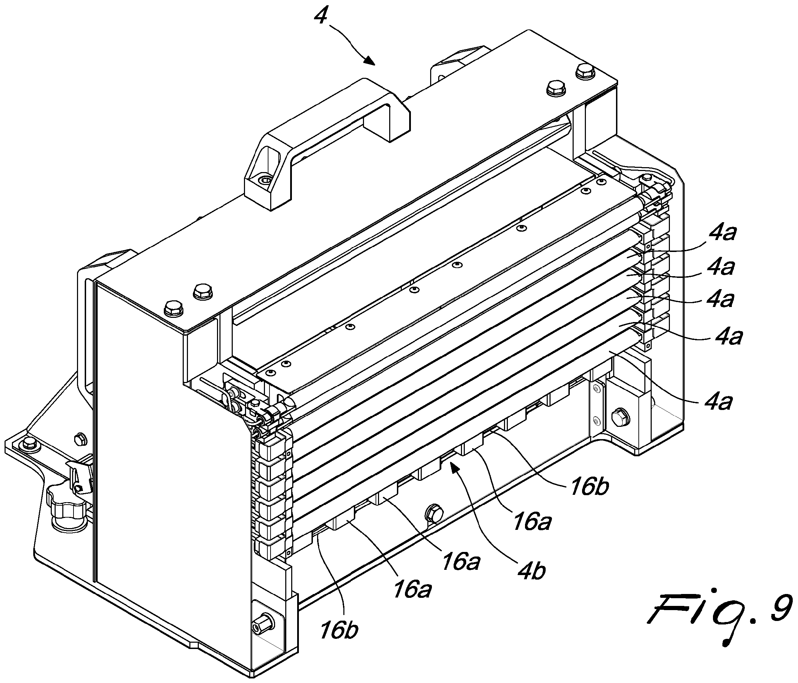

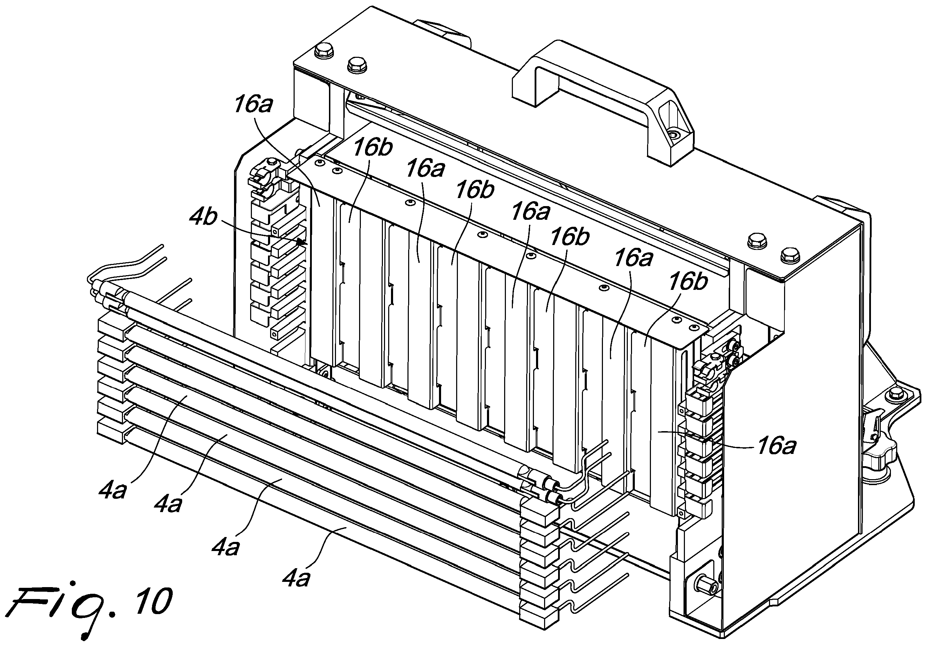

Conveniently, as shown in Figures 9 to 10, at least one closer portion 16b has, at both parts 16c for linking to a respective spaced portion 16a, at least one transit opening 16d for a cooling air stream.

According to a possible constructive variation, the rear reflective body 4b comprises a first rear plate-like body 161 and a second front plate-like body 162.

The second front plate-like body 162 forms a plurality of slits which are parallel to the axis 100 of the preforms 10 and are alternated with closer portions 16a formed on said second front plate-like body 162, so that the first rear plate-like body 161 forms, at said slits, the spaced portions 16b.

It has been found experimentally that if the rear reflective body 4b is also used, the heating of the preforms 10 is extremely more effective.

The radiation reflected by the front reflective element 5 that is not absorbed by the preforms 10 is in fact further reflected by the rear reflective body 4b and so forth; the radiation further reflected by the rear reflective body 4b that is not absorbed by the preforms 10 is further reflected by the front reflective element 5, in a synergistic process.

The shape of the rear reflective body 4b can also be similar, i.e., can correspond to the shape of the front reflective element 5.

According to a particularly important aspect of the present invention, the or each contoured plate-like body 6, 16 is substantially made of metal.

Preferably, the or each reflective body is made of aluminum.

The use of the apparatus 1 according to the invention is as follows.

The preforms 10 are fed to the conveyance device 2 and along the conveyance device 2 they cross the transit tunnels formed by the heating means 3 constituted by the heating element 4 associated with the rear reflective body 4b and by the front reflective elements 5.

In practice it has been found that the invention achieves the intended aim and objects, providing an apparatus 1 that has an extremely high performance.

In particular, tests have been conducted to determine the energy gain provided by using an apparatus 1 according to the invention with respect to standard apparatuses, both with metal components and ceramic components, of the type currently commercially available.

It has been found that by using the apparatuses according to the invention one obtains a reduction in length of even 10-30% of the transit tunnel and a substantially similar percentage reduction of electric power consumption.

Furthermore, it has been found that in some applications it is possible to lower, to the point of eliminating, the use of means for the ventilation and cooling of the lamps and of the preforms, with a consequent simplification of the apparatus as well as a reduction in overall costs.

In practice, the materials used, so long as they are compatible with the specific use as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for heating preforms (10) made of thermoplastic material, comprising a conveyance device (2) for preforms (10) having a longitudinal axis of extension (100), intended to move said preforms along a predefined path (200), and heating means (3) arranged along at least one portion of said predefined path (200), said heating means (3) comprising at least one heating element (4) and at least one front reflective element (5), which are mutually opposite with respect to said predefined path (200) in order to form between them a transit tunnel for said preforms (10), said heating element (4) comprising a plurality of IR (Infra-Red) and/or NIR (Near-Infra-Red) lamps, said front reflective element (5) comprising at least one contoured plate-like body (6) in order to form, in the direction of extension of said predefined path (200), an alternation of closer portions (6a) and spaced portions (6b) with respect to said predefined path (200) that is extended substantially parallel to the axes of extension (100) of said preforms (10), wherein said closer portions (6a) and said spaced portions (6b) are formed on substantially planar surfaces,
**characterized in**
said plate-like body comprising, between contiguous spaced portions (6b) and closer portions (6a), respective connecting parts (6c), at least one of said connecting parts (6c) forming at least one transit opening (6d) for a cooling air flow.

2. The apparatus (1) according to claim 1, **characterized in that** said closer portions (6a) and said spaced portions (6b) are extended along the entire length of said preforms (10).

3. The apparatus (1) according to one or more of the preceding claims, **characterized in that** said heating element (4) comprises at least one rear reflective body (4b).

4. The apparatus (1) according to one or more of the preceding claims, **characterized in that** said rear reflective body (4b) comprises a reflective contoured plate-like element in order to form an alternation of accommodation portions which have a concavity directed toward said predefined path and are configured to arrange themselves at least partially around a respective lamp (4a).

5. The apparatus (1) according to one or more of the preceding claims, **characterized in that** said accommodation portions are formed by an alternation of closer portions and spaced portions with respect to said predefined path that is extended substantially parallel to the axes of extension (100) of said preforms (10).

6. The apparatus (1) according to one or more of the preceding claims, **characterized in that** said rear reflective body (4b) comprises at least one plate-like body that is contoured to form, in the direction of extension of said predefined path, an alternation of closer portions (16a) and spaced portions (16b) with respect to said predefined path (200) which is extended substantially parallel to the axes of extension (100) of said preforms (10).

7. The apparatus (1) according to one or more of the preceding claims, **characterized in that** said contoured plate-like body is substantially made of metal.

## Patentansprüche

1. Vorrichtung (1) zum Erwärmen von Vorformen (10) aus thermoplastischem Material, aufweisend eine Fördereinrichtung (2) für Vorformen (10) mit einer Längserstreckungsachse (100), die dazu bestimmt ist, die Vorformen entlang eines vordefinierten Pfades (200) zu bewegen, und Erwärmungsmittel (3), die entlang mindestens eines Abschnittes des vordefinierten Pfades (200) angeordnet sind, wobei die Erwärmungsmittel (3) mindestens ein Erwärmungselement (4) und mindestens ein vorderes reflektierendes Element (5) aufweisen, die einander in Bezug auf den vordefinierten Pfad (200) gegenüberliegen, um zwischen sich einen Durchgangstunnel für die Vorformen (10) zu bilden, wobei das Erwärmungselement (4) mehrere IR(Infrarot)- und/oder NIR(Nahinfrarot)-Lampen aufweist, wobei das vordere reflektierende Element (5) mindestens einen konturierten plattenartigen Körper (6) aufweist, um in der Erstreckungsrichtung des vordefinierten Pfades (200) einen Wechsel von näheren Abschnitten (6a) und beabstandeten Abschnitten (6b) in Bezug auf den vordefinierten Pfad (200) zu bilden, der sich im Wesentlichen parallel zu den Erstreckungsachsen (100) der Vorformen (10) erstreckt, wobei die näheren Abschnitte (6a) und die beabstandeten Abschnitte (6b) auf im Wesentlichen ebenen Oberflächen ausgebildet sind, **dadurch gekennzeichnet, dass** der plattenartige Körper zwischen benachbarten beabstandeten Abschnitten (6b) und näheren Abschnitten (6a) jeweilige Verbindungsteile (6c) aufweist, wobei mindestens eines der Verbindungsteile (6c) mindestens eine Durchgangsöffnung (6d) für einen Kühlluftstrom bildet.

2. Vorrichtung (1) nach Anspruch 1, **dadurch gekennzeichnet, dass** sich die näheren Abschnitte (6a) und die beabstandeten Abschnitte (6b) entlang der gesamten Länge der Vorformen (10) erstrecken.

3. Vorrichtung (1) nach einem oder mehreren der vorhergehenden Ansprüche, **dadurch gekennzeichnet, dass** das Erwärmungselement (4) mindestens einen hinteren reflektierenden Körper (4b) aufweist.

4. Vorrichtung (1) nach einem oder mehreren der vorhergehenden Ansprüche, **dadurch gekennzeichnet, dass** der hintere reflektierende Körper (4b) ein reflektierendes, konturiertes, plattenartiges Element aufweist, um einen Wechsel von Aufnahmeabschnitten zu bilden, die eine zu dem vordefinierten Pfad hin gerichtete Konkavität haben, und ausgestaltet sind, um sich mindestens teilweise um eine jeweilige Lampe (4a) herum anzuordnen.

5. Vorrichtung (1) nach einem oder mehreren der vorhergehenden Ansprüche, **dadurch gekennzeichnet, dass** die Aufnahmeabschnitte durch einen Wechsel von näheren Abschnitten und beabstandeten Abschnitten in Bezug auf den vordefinierten Pfad gebildet werden, der sich im Wesentlichen parallel zu den Erstreckungsachsen (100) der Vorformen (10) erstreckt.

6. Vorrichtung (1) nach einem oder mehreren der vorhergehenden Ansprüche, **dadurch gekennzeichnet, dass** der hintere reflektierende Körper (4b) mindestens einen plattenartigen Körper aufweist, der konturiert ist, um in der Erstreckungsrichtung des vordefinierten Pfades einen Wechsel von näheren Abschnitten (16a) und beabstandeten Abschnitten (16b) in Bezug auf den vordefinierten Pfad (200) zu bilden, der sich im Wesentlichen parallel zu den Erstreckungsachsen (100) der Vorformen (10) erstreckt.

7. Vorrichtung (1) nach einem oder mehreren der vorhergehenden Ansprüche, **dadurch gekennzeichnet, dass** der konturierte plattenartige Körper im Wesentlichen aus Metall ist.

## Revendications

1. Appareil (1) pour chauffer des préformes (10) en matière thermoplastique, comportant un dispositif de convoyage (2) pour des préformes (10) ayant un axe d'extension longitudinal (100), destiné à déplacer lesdites préformes le long d'un trajet prédéfini (200), et des moyens de chauffage (3) agencés le long d'au moins une partie dudit trajet prédéfini (200), lesdits moyens de chauffage (3) comportant au moins un élément chauffant (4) et au moins un élément réfléchissant avant (5), qui sont mutuellement opposés par rapport audit trajet prédéfini (200) afin de former entre eux un tunnel de transit pour lesdites préformes (10), ledit élément chauffant (4) comportant une pluralité de lampes IR (infrarouge) et/ou NIR (infrarouge proche), ledit élément réfléchissant avant (5) comportant au moins un corps profilé analogue à une plaque (6) afin de former, dans la direction d'extension dudit trajet prédéfini (200), une alternance de parties rapprochées (6a) et de parties espacées (6b) par rapport audit trajet prédéfini (200) qui s'étend de manière sensiblement parallèle aux axes d'extension (100) desdites préformes (100), dans lequel lesdites parties rapprochées (6a) et lesdites parties espacées (6b) sont formées sur des surfaces sensiblement planes,
**caractérisé en ce que** ledit corps analogue à une plaque comporte, entre des parties espacées (6b) et des parties rapprochées (6a) contigües, des parties de liaison (6c) respectives, au moins une desdites parties de liaison (6c) formant au moins une ouverture de transit (6d) pour un écoulement d'air de refroidissement.

2. Appareil (1) selon la revendication 1, **caractérisé en ce que** lesdites parties rapprochées (6a) et lesdites parties espacées (6b) s'étendent le long de toute la longueur desdites préformes (10).

3. Appareil (1) selon une ou plusieurs des revendications précédentes, **caractérisé en ce que** ledit élément chauffant (4) comporte au moins un corps réfléchissant arrière (4b).

4. Appareil (1) selon une ou plusieurs des revendications précédentes, **caractérisé en ce que** ledit corps réfléchissant arrière (4b) comporte un élément réfléchissant profilé analogue à une plaque afin de former une alternance de parties de réception qui ont une concavité dirigée vers ledit trajet prédéfini et sont configurées pour s'agencer elles-mêmes au moins partiellement autour d'une lampe (4a) respective.

5. Appareil (1) selon une ou plusieurs des revendications précédentes, **caractérisé en ce que** lesdites parties de réception sont formées par une alternance de parties rapprochées et de parties espacées par rapport audit trajet prédéfini qui s'étend de manière sensiblement parallèle aux axes d'extension (100) desdites préformes (10).

6. Appareil (1) selon une ou plusieurs des revendications précédentes, **caractérisé en ce que** ledit corps réfléchissant arrière (4b) comporte au moins un corps analogue à une plaque qui est profilé pour former, dans la direction d'extension dudit trajet prédéfini, une alternance de parties rapprochées (16a) et de parties espacées (16b) par rapport audit trajet prédéfini (200) qui s'étend de manière sensiblement parallèle aux axes d'extension (100) desdites préformes (10).

7. Appareil (1) selon une ou plusieurs des revendications précédentes, **caractérisé en ce que** ledit corps profilé analogue à une plaque est essentiellement constitué de métal.
